# EUROPÄISCHE PATENTSCHRIFT

(11) **EP 1 603 970 B1**
(45) Veröffentlichungstag und Bekanntmachung des Hinweises auf die Patenterteilung: **11.07.2007**
(21) Anmeldenummer: 04716297.9
(22) Anmeldetag: 02.03.2004
(51) Int. Cl.: C08K 3/00, C08L 75/04, C08K 3/04

(54) **HALOGENFREIER, FLAMMHEMMENDER POLYURETHANHARTSCHAUM FÜR BRANDSCHUTZTECHNISCHE ANWENDUNGEN**
HALOGEN-FREE, FIREPROOFING POLYURETHANE HARD FOAM FOR FIRE PROTECTION APPLICATIONS
MOUSSE DURE EN POLYURETHANNE SANS HALOGENES, RETARDATRICE DE COMBUSTION, POUR APPLICATIONS ANTI-INCENDIE

(30) Priorität: 03.03.2003 DE 10310006
(43) Veröffentlichungstag der Anmeldung: 14.12.2005
(73) Patentinhaber: Polymerics GmbH, 12681 Berlin (DE)
(72) Erfinder: LEISTNER, Aniela, D-15366 Birkenstein (DE); BRUSENBACH, Peter, D-12619 Berlin (DE); LEISTNER, Andre, D-15366 Birkenstein (DE); PETRAS, Hans-Sieghard Prof. Dr., D-15732 Eichwalde (DE)
(74) Vertreter: Neumann, Günter
(86) Internationale Anmeldenummer: PCT/IB2004/050189
(87) Internationale Veröffentlichungsnummer: WO 2004/083291

(56) Entgegenhaltungen:
- EP-A- 0 337 228
- DE-U- 29 509 033

## Beschreibung

Die vorliegende Erfindung betrifft einen halogenfreien, flammhemmenden lyu-Porethanhartschaum auf Isocyanatbasis und dessen Verwendung für brandschutztechnische Zwecke.

Hartschaumstoffe auf Isocyanatbasis, insbesondere Polyurethan- und Isocyanuratschaumstoffe, sind seit langem bekannt. Eine umfassende Übersicht über die Herstellung und Verwendung von Hartschaumstoffen auf Isocyanatbasis wurde beispielsweise publiziert in Kunststoffhandbuch, Band VII, Polyurethane, Carl-Hanser-Verlag, München, 1. Auflage 1966, herausgegeben von Dr. R. Vieweg und Dr. A. Höchtlein, sowie 2. Auflage 1983 und 3. Auflage 1993, herausgegeben von Dr. G. Oertel.

In solchen Hartschaumstoffen auf Isocyanatbasis ist es gegenwärtig üblich, auch verschiedene halogenhaltige Stoffe einzusetzen. Nach dem Austausch von FCKW durch alternative, halogenhaltige Treibmittel, wie HFCKW und HFKW zeichnet sich eine Tendenz ab, auch diese halogenhaltigen Treibmittel durch halogenfreie, wie Kohlendioxid und Kohlenwasserstoffe zu ersetzen. Eine analoge Entwicklung hat auch auf dem Gebiet der Flammschutzmittel begonnen, wo zur Zeit halogenhaltige Lösungen Stand der Technik sind. So beschreibt DE 100 07 980 A1 ein halogenhaltiges Zweikomponenten-Ortschaumsystem mit erhöhter Feuerwiderstandsdauer. Zur Erreichung derselben ist jedoch der Einsatz von halogenierten Polyolen, vorzugsweise bromierten Polyolen, notwendig. Es werden zunehmend Gefahren diskutiert, die sowohl bei der unkontrollierten Verbrennung halogenhaltiger Substanzen im Brandfall als auch bei der kontrollierten Beseitigung solcher Altstoffe in Müllverbrennungsanlagen entstehen können. Die im Brandfall auftretenden korrosiven Halogenkohlenwasserstoffe sind auch häufig Ursache für Sekundärschäden, welche die eigentlichen Brandkosten um ein Vielfaches übersteigen. Aus wirtschaftlichen und ökotoxikologischen Gründen sowie aufgrund verbesserter Brandnebenerscheinungen bezüglich Rauchgasdichte und Rauchgastoxizität werden demnach halogenfreie Flammschutzmittelsysteme grundsätzlich bevorzugt. Die Suche nach halogenfrei flammgeschützten Polyurethanhartschäumen ist daher eine wichtige technische Aufgabe.

Eine Reihe von Lösungen für halogenfrei flammgeschützte Hartschaumstoffe auf Isocyanatbasis sind z.B. aus DE 199 56 448 A1, DE 40 03 718 C2, DE 10014 593 C2, DE 100 14 597 C2, DE 195 41 037 A1 bekannt. Diese haben jedoch den Nachteil, daß sie gegenüber dem oben angeführten halogenhaltigen System eine weitaus geringere Flammwidrigkeit aufweisen. (Baustoffklasse B2 gemäß DIN 4102).

Aus dem Gebrauchsmuster DE 295 09 033 ist ein brandhemmendes Polyurethan bekannt, welches ein ABC-Löschpulver enthält. Nachteilig für den gebrauchsmustergemäßen Polyurethanschaum ist, daß er zur Erreichung der B1-Kassifizierung 50 Ma.-% des ABC-Löschpulvers benötigt, dadurch schwer verarbeitbar ist, nicht in Kartuschensystemen konfektionierbar ist und schlechte mechanische Eigenschaften aufweist.

Der expandierbare Graphit, auch als Blähgraphit bezeichnet, ist als halogenfreies Flammschutzmittel für Hart- bzw. Weichschäume in den Patentschriften US 3 574 644 und GB 2 168 706 beschrieben. Bekannte Nachteile beim Einsatz von Blähgraphit in Polyurethanen sind starke Docht- und Flugaschenbildung sowie hohe Rauchgasdichte im Brandfall.

Darüber hinaus weisen spezielle Flammschutzmittel deutlich höhere Materialkosten als die üblicher Polyurethan-Komponenten auf. Ihr Preis ist typischerweise 2 bis 3 mal so hoch.

Die Aufgabe der vorliegenden Erfindung besteht darin, einen halogenfreien Polyurethanhartschaum mit hoher Flammwidrigkeit und Schaumausbeute bereitzustellen, der die oben beschriebenen Nachteile nicht aufweist und der sich vor Ort auf der Baustelle einfach verarbeiten läßt. Des weiteren besteht die Aufgabe darin, ein weitaus kostengünstigeres Flammschutzmittel einzusetzen, welches sowohl der Forderung nach einer umweltverträglichen Produktion und Anwendung des Polyurethanhartschaumes, als auch dem Gebot des Wertstoffrecyclings Rechnung trägt.

Diese Aufgabe konnte überraschenderweise durch den erfindungsgemäßen Polyurethanhartschaum gelöst werden, in dem eine Kombination aus ABC-Löschpulver und expandierbarem Graphit (Blähgraphit) als Flammschutzmittel verwendet wird. Das Ergebnis ist ein feinzelliger Polyurethanhartschaum mit hoher Flammenwidrigkeit, der im Brandfall nur wenig intumesziert und dabei eine geringe Rauchgasdichte aufweist. Die erfinderische Kombination aus ABC-Löschpulver und Blähgraphit weist einen ausgeprägten Synergismus bezüglich der Flammschutzwirkung auf, wobei sich die Einzelbestandteile der Kombination in ihrer Wirkung gegenseitig verstärken.

Die Erfindung betrifft daher einen halogenfreien Polyurethanhartschaum, der dadurch gekennzeichnet ist, daß die Polyolkomponente (A) mindestens ein Polyetherpolyol, mindestens ein Aminopolyol, einen Katalysator für die Reaktion des Polyols mit dem Polyisocyanat, Wasser und/oder ein physikalisches Treibmittel, ABC-Löschpulver und eine Polyisocyanat-Komponente (B), die mindestens ein Polyisocyanat und expandierbaren Graphit (Blähgraphit) enthält, wobei die Mengenverhältnisse der Polyole und Isocyanate so abgestimmt sind, daß sich beim bestimmungsgemäßen Vermischen der Polyol-Komponente (A) mit der Polyisocyanat-Komponente (B) ein Isocyanat-Index > 110 ergibt.

Der Isocyanat-Index einer Rezeptur dividiert durch 100 gibt an, in welchem Äquivalentverhältnis NCO/OH die beiden Komponenten eingesetzt werden.

Gemäß einer bevorzugten Ausführungsform der Erfindung enthält die PolyolKomponente (A) 5 bis 30 Ma.-%, vorzugsweise 10 bis 20 Ma.-% Polyetherpolyol, 3 bis 30 Ma.-%, vorzugsweise 5 bis 20 Ma.-% Aminopolyol.

Als Polyetherpolyol für den erfindungsgemäßen Polyurethanhartschaum verwendet man vorzugsweise eines mit einer Funktionalität von 3 bis 5 und einer OH-Zahl von 300 bis 700. Das Aminopolyol für den erfindungsgemäßen Polyurethanhartschaum besitzt vorzugsweise eine Funktionalität von 2 bis 5 und eine OH-Zahl von 200 bis 700, während die Polyisocyanat-Komponente (B) mit Vorteil ein Polyisocyanat mit einer Funktionalität > 2 und einen NCO-Gehalt von 20 bis 40 % enthält. Derartige Komponenten sind dem Fachmann hinlänglich bekannt und im Handel erhältlich.

Als Polyisocyanat-Komponente (B) für den erfindungsgemäßen Polyurethanhartschaum können beispielsweise aliphatische, cyclische, araliphatische, aromatische oder heterocyclische Polyisocyanate, insbesondere 4,4'-Diphenylmethandiisocyanat (MDI), Polyphenylen-polymethylen-polyisocyanate (RoH-MDI), Toluylendiisocyanat, Isopropylendiisocyanat, Hexamethylendiisocyanat, oder eines der üblichen Isocyanat-Präpolymere eingesetzt werden.

Die Polyolkomponente (A) für den erfindungsgemäßen Polyurethanhartschaum enthält einen üblichen Katalysator für die Reaktion des Polyols mit dem Polyisocyanat, beispielsweise organische Zinnverbindungen, wie Zinndiacetat, Zinndioctoat, Dialkylzinndilaurat und/oder stark basische Amine wie N,N-dimethylhexylcycloamin, Triethylamin und 1,4-Diazabicyclo-(2,2,2)-octan (DABCO). Die Katalysatoren werden vorzugsweise in einer Menge von 0,1 bis 2 Ma.-% bezogen auf die Polyol-Komponente (A) eingesetzt.

Gemäß einer bevorzugten Ausführungsform enthält der Polyurethanhartschaum die Flammschutzmittelkombination ABC-Löschpulver und Blähgraphit in einem Anteil von 20 bis 60 Ma.-%, besonders bevorzugt von 20 bis 40 Ma.-%, wobei der expandierbare Graphit bevorzugt in die Polyisocyanat-Komponente (B) eingearbeitet wird. Tests haben ergeben, daß der erfindungsgemäße Polyurethanhartschaum die Brandklassifizierung B 1 (schwer entflammbar) nach DIN 4102 erfüllt.

Überraschenderweise haben weitere Versuche mit ausgehärteten Produktproben, welche 14 Tage unter Wasser gelagert wurden, ergeben, daß weder eine Quellung des ausgehärteten Produktes noch eine Minderung der brandhemmenden Eigenschaften eintrat. Dies war wegen der beträchtlichen Wasserlöslichkeit der Hauptbestandteile des ABC-Löschpulvers unerwartet.

Die Kombination von ABC-Löschpulver und Blähgraphit läßt sich in weitem Maße variieren, ohne dass die brandhemmenden Eigenschaften dadurch beeinträchtigt werden. So läßt sich die Viskosität der Polyolkomponente (A) bzw. Polyisocyanat-Komponente (B) in Hinblick auf eine leichte Verarbeitbarkeit, als auch die mechanischen Eigenschaften des Polyurethanhartschaumes hinsichtlich seines Einsatzgebietes optimal einstellen.

Das ABC-Löschpulver fällt als Wertstoff aus ABC-Feuerlöschern bei verschiedenen Recyclingfirmen in großen Mengen an. Eine sinnvolle Verwertung derselben steht bis zum heutigen Zeitpunkt noch aus. Die stoffliche Wiederverwertung des ABC-Löschpulvers als Bestandteil eines Brandschutzschaumes stellt im Sinne des bundesdeutschen Kreislaufwirtschaft- und Abfallgesetzes eine akzeptable Lösung in ökologischer und wirtschaftlicher Hinsicht dar.

Aufgrund der sehr komplexen Zusammensetzung des ABC-Löschpulvers, welches neben den Hauptbestandteilen Monoammoniumphosphat und Ammoniumsulfat in der Regel auch Silikate, Glimmer und Schwerspat enthält, kann auf die Einbringung von üblicherweise verwendeten anorganischen Füllstoffen zur Beeinflussung der mechanischen Eigenschaften verzichtet werden.

Gemäß einer bevorzugten Ausführung der Erfindung enthält die Polyol-Komponente (A) als Treibmittel zur Herstellung der zelligen Polyurethane Wasser, das mit dem Isocyanat unter Freisetzung von Kohlendioxid reagiert. Gemeinsam mit oder an Stelle von Wasser können auch sogenannte physikalisch wirkende Treibmittel wie n-, iso- oder Cyclopentan eingesetzt werden. Dabei handelt es sich um gegenüber den Einsatzkomponenten inerte Verbindungen, die zumeist bei Raumtemperatur flüssig sind und bei den Bedingungen der Urethanreaktion verdampfen. Die Menge an Wasser liegt vorzugsweise im Bereich zwischen 0,2 bis 2 Ma.-% bezogen auf die Polyol-komponente (A).

Zur Verbesserung der Handhabung und zur Einstellung der Viskosität und der Fließeigenschaften des erfindungsgemäßen Zweikomponenten-Schaumstoffsystems beim Vermischen und Ausbringen ist es möglich, ein Thixotropiermittel zuzusetzen, wie hydrophobe oder hydrophobierte Kieselsäuren.

Natürlich ist es auch ohne weiteres möglich, in die Polyol-Komponente (A) und/ oder die Polyisocyanat-Komponente (B) zusätzliche halogenfreie Flammschutzmittel wie Ammoniumpolyphosphat, Harnstoff oder organisch modifizierte nanodisperse Schichtsilikate, einzeln oder im Gemisch, einzubringen; sowie die an sich bekannten Hilfs- und Zusatzstoffe einzuarbeiten, wie z. Bsp. Schaumstabilisatoren zur Steuerung der Zellgröße, Förderung der Ausbildung von homogenen Schaumstrukturen und Stabilisierung der entstehenden Zellen. Hierbei werden bevorzugt Polysiloxan-Polyether-Copolymerisate im Bereich von 0,5 bis 2 Mass.-% bezogen auf das ausgehärtete Produkt eingesetzt.

Der Fachmann kann durch entsprechende Auswahl der Bestandteile und Mengenverhältnisse von Polyol-Komponte (A) und Polyisocyanat-Komponente (B) die Reaktionsgeschwindigkeiten, die Viskosität sowie die Vernetzungsdichte des erhaltenen Polyurethanschaums gezielt einstellen.

Gemäß einer bevorzugten Ausführungform wird der erfindungsgemäße Polyurethanhartschaum aus einer Polyol-Komponente (A) und einer Polyisocyanat-Komponente (B) hergestellt, die in einer Zwei- oder Mehrkammervorrichtung getrennt aufbewahrt und unter Anwendungsbedingungen bei Einhaltung des Isocyanatindexes > 110 zur Reaktion gebracht werden. In dieser Weise gelingt es, die in diesen getrennten Behältern, beispielsweise Kunststoffbeuteln oder Kartuschen, vorliegenden Komponenten vor Ort zu vermischen und zu der gewünschten Brandabschottung auf zuschäumen und auszuhärten. Dabei ist der bevorzugte Polyurethanhartschaumstoff aus Zweikomponenten-Kartuschen mit statischen Mischern oder aus Doppelkammerbeuteln, deren Komponenten (A) und (B) entweder vor oder nach dem Einführen in die zu verschließenden Öffnungen miteinander vermischt werden, auszubringen. Der dabei entstehende hochviskose Schaum ist standfest, läßt sich auch über Kopf und in Lagen aufbringen und ermöglicht somit eine hermetische Abschottung auch unregelmäßig geformter Öffnungen sowie Hohlräume, welche mit vorgefertigten Brandschutz-Formteilen nicht oder nur schwer möglich ist.

Die vorliegende Erfindung soll anhand des nachfolgenden Beispiels erläutert werden, ohne daß hierdurch eine entsprechende Eingrenzung vorgenommen wird.

### Beispiel

Die Polyol-Komponente (A) wird durch Vermischen folgender Bestandteile hergestellt:

| | |
|---|---|
| Polyetherpolyol, OH-Zahl 400 mg KOH/g | 28,0 g |
| Aminopolyol, OH-Zahl 635 mg KOH/g | 18,0 g |
| Katalysator (DMCHA) | 1,5 g |
| Schaumstabilisator (Polysiloxan-Basis) | 1,5 g |
| Wasser | 1,0 g |
| ABC-Löschpulver | 50,0 g |

Zur Bildung der Polyisocyanat-Komponente (B) werden folgende Bestandteile vermischt:

| | |
|---|---|
| 4,4'-Diphenylmethandiisocyanat (31 % NCO) | 73,0 g |
| Blähgraphit | 25,0 g |
| Aerosil R202 | 2,0 g |

Die beiden Komponenten werden in gleich großen Volumina in getrennte Behälter, beispielsweise in eine Zweikomponenten-Kartusche, eingebracht. Beim Vermischen der beiden Komponenten mittels eines statischen Mischers erhält man eine auf schäumende Reaktionsmasse, die aufgrund ihrer Viskosität auch über Kopf in eine zu verschließende Öffnung eingebracht werden kann, wo das Material weiter ausschäumt und aushärtet.

Das erhaltene Material entspricht der Baustoffklassifizierung B1 gem. DIN 4102-1 und zeichnet sich durch eine feinzellige, gleichmäßige Struktur, gute mechanische Festigkeit und ausgezeichnete Haftfestigkeit gegenüber Gesteinsmaterialien, als auch metallischen Bauteilen, aus.

Der so hergestellte Polyurethanhartschaum kann zum Ausfüllen von Öffnungen, Kabel- und Rohrdurchführungen in Wänden, Böden und/oder Decken von Gebäuden, als Bestandteil von Befestigungssystemen zum Abhängen von Rauchabzugskanälen, Elektrokanalsystemen, Brandschutzdecken und anderen brandschutztechnischen Bauteilen verwendet werden.

## Patentansprüche

1. Halogenfreier, flammhemmender Polyurethanhartschaum, herstellbar aus einer Polyol-Komponente (A) und einer Polyisocyanat-Komponente (B), enthaltend Blähgraphit als Flammschutzmittel, **dadurch gekennzeichnet, dass** er als weiteres Flammschutzmittel ABC-Löschpulver mit den Hauptbestandteilen Monoammoniumphosphat und Ammoniumsulfat enthält.

2. Polyurethanhartschaum nach Anspruch 1, **dadurch gekennzeichnet, dass** er das ABC-Löschpulver und den Blähgraphit im Massenverhältnis von 1 : 5 bis 5 : 1 enthält.

3. Polyurethanhartschaum nach den Ansprüchen 1 oder 2, **dadurch gekennzeichnet, dass** er die Kombination aus ABC-Pulver und Blähgraphit in einem Anteil von 20 bis 60 Ma.-% des ausgehärteten Produkts enthält.

4. Polyurethanhartschaum nach einem der Ansprüche 1 bis 3, **dadurch gekennzeichnet, dass** die Polyol-Komponente (A) mindestens ein Polyetherpolyol, mindestens ein Aminopolyol und Wasser oder ein anderes halogenfreies Treibmittel und die Polyisocyanat-Komponente (B), mindestens ein Polyisocyanat, mindestens ein Thixotropiermittel, vorzugsweise hydrophobe oder hydrophobierte Kieselsäure, enthält, wobei die Polyol-Komponente (A) und die Polyisocyanat-Komponente (B) in ihrem Mengtenverhältnis so aufeinander abgestimmt sind, dass sich ein Isocyanat-Index > 110 ergibt.

5. Polyurethanhartschaum nach Anspruch 4, **dadurch gekennzeichnet, dass** das Polyetherpolyol ein Polyetherpolyol mit einer Funktionalität von 3 bis 5, einer OH-Zahl von 300 bis 700 und das Aminopolyol ein Aminopolyol mit einer Funktionalität von 2 bis 5 und einer OH-Zahl von 200 bis 700 und das Polyisocyanat ein Polyisocyanat mit einer Funktionalität > 2 und einem NCO-Gehalt von 20 bis 40 % ist.

6. Polyurethanhartschaum nach einem der Ansprüche 1 bis 5, **dadurch gekennzeichnet, dass** das ABC-Löschpulver recyceltes ABC-Löschpulver ist.

7. Polyurethanhartschaum nach einem der Ansprüche 1 bis 6, **dadurch gekennzeichnet, dass** er ein weiteres zusätzliches Flammschutzmittel, vorzugsweise Ammoniumpolyphosphat, Harnstoff oder organisch modifizierte nanodisperse Schichtsilikate einzeln oder im Gemisch, enthält.

8. Polyurethanhartschaum nach einem der Ansprüche 1 bis 7, **dadurch gekennzeichnet, dass** der Blähgraphit bevorzugt in die Polyisocyanat-Komponente (B) eingearbeitet ist.

9. Verwendung des Polyurethanhartschaums nach einem der Ansprüche 1 bis 8 in einer Zwei- oder Mehrkammervorrichtung, in einem Doppelkammerbeutel, vorzugsweise aus Kunststoff, oder in einer Zweikammer-Kartusche mit statischem Mischer unter getrennter Aufbewahrung der Polyol-Komponente (A) und Polyisocyanat-Komponente (B).

10. Verwendung des Polyurethanhartschaumes nach einem der Ansprüche 1 bis 9 zum Ausfüllen von Öffnungen, Kabel- und Rohrdurchführungen in Wänden, Böden und/oder Decken von Gebäuden, als Bestandteil von Befestigungssystemen zum Abhängen von Rauchabzugskanälen, Elektrokanalsystemen, Brandschutzdecken und anderen technischen Bauteilen zum Zwecke des Brandschutzes.

## Claims

1. A halogen-free, flame-retardant, rigid polyurethane foam obtained from a polyol component (A) and a polyisocyanate component (B), containing expandable graphite as a flame-retardant agent, **characterised in that** it comprises ABC extinguishing powder as an additional flame-retardant agent whose main constituents are monoammonium phosphate and ammonium sulphate.

2. A rigid polyurethane foam according to claim 1, **characterised in that** it comprises the ABC extinguishing powder and the expandable graphite in a weight ratio from 1:5 to 5:1.

3. A rigid polyurethane foam according to claims 1 or 2, **characterised in that** it comprises the combination of ABC extinguishing powder and expandable graphite in an amount of 20 to 60 weight% of the cured product.

4. A rigid polyurethane foam according to any of claims 1 to 3, **characterised in that** the polyol component (A) comprises at least one polyether polyol, at least one amino polyol, and water or another halogen-free blowing agent, and the polyisocyanate component (B) comprises at least one polyisocyanate, at least one thixotropy additive - preferably hydrophobic silica or hydrophobised silica - where the amounts of polyol component (A) and polyisocyanate component (B) are chosen such that an isocyanate index of >110 is obtained.

5. A rigid polyurethane foam according to claim 4, **characterised in that** the polyether polyol is a polyether polyol having a functionality from 3 to 5, an OH number from 300 to 700, and the amino polyol is an amino polyol having a functionality from 2 to 5 and an OH number from 200 to 700, and the polyisocyanate is a polyisocyanate having a functionality of >2 and an NCO content of 20 to 40%.

6. A rigid polyurethane foam according to any of claims 1 to 5, **characterised in that** the ABC extinguishing powder is a recycled ABC extinguishing powder.

7. A rigig polyurethane foam according to any of claims 1 to 6, **characterised in that** it comprises an additional flame-retardant agent, preferably ammonium polyphosphate, urea or organically modified nanodisperse layered silicate, either alone or as a mixture.

8. A rigid polyurethane foam according to any of claims 1 to 7, **characterised in that** the expandable graphite is preferably present in the polyisocyanate component (B).

9. Application of the rigid polyurethane foam according to any of claims 1 to 8 in a two- or multi-compartment appartus, in a two-compartment bag - preferably made of plastics - or in a two-compartment cartridge with a static mixer where the polyol component (A) and the polyisocyanate component (B) are stored separately.

10. Application of the rigid polyurethane foam according to any of claims 1 to 9 for filling holes, cable- and tube openings in walls, floors and/or ceilings of buildings, as part of mounting systems for fume outlet channels, electric cable channels, flame resistant ceilings and other technical fire-protective components.

## Revendications

1. Mousse dure en polyuréthane sans halogène, retardatrice de combustion, fabriquée à partir d'un composé polyol (A) et d'un composé polyisocyanate (B), contenant comme agent de protection contre les incendies du graphite gonflant, **caractérisée en ce qu'**elle contient comme autre agent de protection contre les incendies une poudre extinctrice ABC principalement composée de phosphate d'ammonium et de sulfate d'ammonium.

2. Mousse dure en polyuréthane, selon la revendication 1, **caractérisée en ce qu'**elle contient la poudre extinctrice ABC et le graphite gonflant dans des proportions massiques allant de 1:5 à 5:1.

3. Mousse dure en polyuréthane, selon les revendications 1 ou 2, **caractérisée en ce qu'**elle contient 20 à 60% en poids, une fois durcie, du mélange poudre extinctrice ABC / graphite gonflant.

4. Mousse dure en polyuréthane, selon l'une quelconque des revendications 1 à 3, **caractérisée en ce que** le composé polyol (A) contient au moins un polyéther-polyol, au moins un aminopolyol et de l'eau ou un autre moyen de propulsion non halogéné, et, **en ce que** le composé polyisocyanate contient au moins un polyisocyanate, au moins un agent de thixotropie, de préférence un acide silicique hydrophobe ou rendu hydrophobe et dans laquelle les quantités en composé polyol (A) et en composé polyisocyanate (B) sont ajustées afin d'obtenir un indice d'isocyanate >110.

5. Mousse dure en polyuréthane, selon la revendication 4, **caractérisée en ce que** le polyéther-polyol est un polyéther-polyol de fonctionnalité 3 à 5 et d'indice OH compris entre 300 et 700, **que** l'aminopolyol est un aminopolyol de fonctionnalité 2 à 5 et d'indice OH compris entre 200 et 700 et que le polyisocyanate est un polyisocyanate de fonctionnalité >2 et de teneur en NCO comprise entre 20 et 40%.

6. Mousse dure en polyuréthane, selon l'une quelconque des revendications 1 à 5, **caractérisée en ce que** la poudre extinctrice ABC est une poudre extinctrice ABC recyclée.

7. Mousse dure en polyuréthane, selon l'une quelconque des revendications 1 à 6, **caractérisée en ce qu'**elle contient un agent de protection contre les incendies additionnel, préférentiellement un ou plusieurs des composés suivants : polyphosphate d'ammonium, urée ou silicate lamellaire (ou phyllosilicate) nanodispersé et organiquement modifié.

8. Mousse dure en polyuréthane, selon l'une quelconque des revendications 1 à 7, **caractérisée en ce que** le graphite gonflant est préférentiellement incorporé au composé isocyanate (B).

9. Utilisation de la mousse dure en polyuréthane, selon l'une quelconque des revendications 1 à 8, à l'aide d'un dispositif à double compartiment, ou plus, permettant de conserver séparément le composé polyol (A) et le composé isocyanate (B) sachets compartimentés, de préférence en matière plastique ou cartouches compartimentées munies de mélangeurs statiques.

10. Utilisation de la mousse dure en polyuréthane, selon l'une quelconque des revendications, pour le remplissage de cavités, de traversées de câbles et de tuyaux dans les parois, les sols et/ou les plafonds de bâtiments, ou en tant qu'élément du système d'accroche pour les conduits de fumée, les conduits électriques, les plafonds anti-feu ou tout autre élément technique utilisé pour la protection contre les incendies.
